# EUROPÄISCHE PATENTSCHRIFT

(11) **EP 2 216 160 B1**
(45) Veröffentlichungstag und Bekanntmachung des Hinweises auf die Patenterteilung: **25.06.2014**
(21) Anmeldenummer: 10150541.0
(22) Anmeldetag: 12.01.2010
(51) Int. Cl.: B29C 49/42, B29C 49/64, B65G 47/80

(54) **Vorrichtung und Verfahren zur Herstellung und Weiterbearbeitung von Kunststoffhohlkörpern**
Device and method for manufacturing and further processing of plastic hollow bodies
Dispositif et procédé de fabrication et de retraitement de corps creux en matière synthétique

(30) Priorität: 04.02.2009 DE 102009007424
(43) Veröffentlichungstag der Anmeldung: 11.08.2010
(73) Patentinhaber: Krones AG, 93073 Neutraubling (DE)
(72) Erfinder: Hirdina, Jochen, 93057 Regensburg (DE)
(74) Vertreter: Grünecker, Kinkeldey, Stockmair & Schwanhäusser

(56) Entgegenhaltungen:
- WO-A1-2005/087628
- DE-A1- 19 909 644
- DE-A1-102007 030 917
- US-A- 5 851 478
- US-A- 5 996 322

## Beschreibung

Die Erfindung betrifft eine Vorrichtung zur Herstellung und Weiterbearbeitung von Kunststoffhohlkörpern nach dem Oberbegriff des Anspruchs 1. Weiterhin betrifft die Erfindung ein Verfahren zur Herstellung von Kunststoffhohlkörpern nach dem Oberbegriff des Anspruchs 8.

Kunststoffhohlkörper, insbesondere PET-Flaschen, werden aus Vorformlingen im Streckblasverfahren hergestellt. Die Vorformlinge werden dazu auf eine definierte Prozesstemperatur erwärmt, um den Umformvorgang zu ermöglichen. Zur Entnahme der fertig geblasenen Flaschen aus dafür vorgesehenen Blasformen werden die Flaschen gekühlt.

Patentdokument WO 2005/087 628 A1 zeigt eine Methode und eine Vorrichtung zum Transportieren von Hohlkörpern entlang einer Produktionsstrecke. Dabei ist die Vorrichtung mit einer Kontur vorgesehen, an welche der Hohlkörper während dem Transport fixiert wird.

US 5996322 offenbart eine Vorrichtung und ein Verfahren nach den Oberbegriffen der unabhängigen Ansprüchen.

DE 10 2007 030 917 offenbart einen drehbaren Standteller in einer Etikettiermaschine.

US 5 851 478 offenbart einen Standteller mit Mitteln zur Kühlung.

Wenn aber die Blasmaschine mit dem Füller und/oder der Etikettiermaschine verblockt ist, das heißt, dass das Füllen oder das Etikettieren unmittelbar im Anschluss an die Flaschenherstellung erfolgt, sind die zwischen Blasen und Füllen bzw. Etikettieren gegeben Zeiträume kurz, sodass nur wenig Zeit zum Kühlen verbleibt. Durch die prozessbedingt nur kurze Luftspülung werden indes nur die relativ dünnen Flaschenwandungsbereiche ausreichend auf die geeignete Weiterbearbeitungstemperatur heruntergekühlt, die relativ dickwandigen Bereich, insbesondere der Boden, dagegen weisen oft noch eine für die Weiterverarbeitung ungeeignete, weil zu hohe Temperatur auf. Der Boden einer PET-Flasche ist aber prozessbedingt immer um ein Vielfaches dicker als die Flaschenwandung. Die größere Materialstärke hat zur Folge, dass in diesem Bereich mehr Wärme abgeführt werden muss, was durch die kurze Luftspülung in den Blasformen nicht erreicht wird. Zur Weiterbearbeitung der PET-Flaschen bedarf es aber einer maximal zulässigen Temperatur, damit keine Verformungen bei einer anschließenden Etikettierung oder Füllung der Flasche auftreten.

Zur weitern Abkühlung der Flasche, insbesondere des Flaschenbodens, auf für die Weiterbehandlung geeignete Temperaturen sind aus dem Stand der Technik verschiedene Verfahren bekannt. Gewöhnlich werden die Flaschen über eine längere Strecke transportiert, wobei sie während des Transports aktiv gekühlt werden. Einerseits wird Luft in die Flaschen eingeblasen, andererseits werden die Flaschen von außen mit Luft angeblasen. Bei einem anderen Verfahren werden die Behälter auf einer definierten Förderstrecke transportiert, wobei der Behälterboden von außen mit einem Kühlmedium angesprüht oder angeblasen wird. Die hierbei eingesetzten Kühlmedien sind Wasser oder gekühlte Luft. Als dritte Möglichkeit hat sich das Einsprühen eines Kühlgases in den Innenraum der Flaschen etabliert.

Diese genannten Abkühlprozesse weisen den gemeinsamen Nachteil auf, dass die PET-Flaschen über eine mehr oder weniger längere Strecke transportiert werden, ohne dass die Flaschen weiterverarbeitet werden können, was bei verblockten Anlagen zu Leistungsbeschränkungen führt.

Es ist deshalb eine Aufgabe der vorliegenden Erfindung, die eingangs genannte Vorrichtung und das Verfahren weiter zu entwickeln und die vorstehend beschriebenen Nachteile zu überwinden.

Eine Vorrichtung zur Lösung dieser Aufgabe weist die Merkmale des Anspruchs 1 auf. Danach wird eine Vorrichtung zur Herstellung und Weiterverarbeitung von Kunststoffhohlkörpern, insbesondere PET-Flaschen, vorgeschlagen, die eine Streckblaseinrichtung und ein damit verblockte nachgeschaltete Weiterbehandlungsmachine in Form eines Füllers oder einer Etikettiereinrichtung aufweist. Die Vorrichtung ist gekennzeichnet durch wenigstens einen Standteller in der Weiterbehandlungsmaschine, auf dem jeweils ein Kunststoffhohlkörper anordenbar ist und dessen Standfläche wenigstens teilweise mit einer äußeren Bodenkontur des Kunststoffhohlkörpers korrespondiert.

Die Flaschen werden demnach während des Transports duch die nachgeschaltete Weiterbehandlungsmaschine in Form einer Etikettiermaschine oder eines Füllers auf den dort vorhandenen, entsprechend umgestalteten Standtellern auf die erwünschte Temperatur heruntergekühlt, sodass keine zusätzlichen Kühlstrecken in die verblockte Anlage eingeschaltet werden müssen.

Vorteilhafterweise ist der Standteller derart ausgebildet, dass er zumindest teilweise der Bodenkontur der PET-Flasche entspricht. Durch eine möglichst großflächige Anlage der Flasche auf dem Standteller wird eine entsprechend schnelle Abkühlung des Bodens erreicht.

Nach einer vorteilhaften Ausgestaltung der Erfindung weist der Standteller ein Formstück auf, insbesondere ist der Standteller als Formstück ausgebildet. Neben der Aufnahme des Kunststoffhohlkörpers dient der Standteller auch gleichzeitig als Transportmittel für den Kunststoffhohlkörper. Dadurch, dass der Standteller ein Formstück aufweist, kann der Standteller selbst von einfacher Gestalt sein. Demgegenüber ist es aber auch denkbar, den Standteller als Formstück auszubilden, zumindest aber wenigstens eine Oberfläche des Standtellers.

Nach einer Weiterbildung der Erfindung ist das Formstück wenigstens teilweise im Bereich einer Auflage zwischen dem Kunststoffhohlkörper und dem Standteller angeordnet. Aufgrund der Gleichförmigkeit von Standteller und Bodenseite des Kunststoffhohlkörpers lässt sich der Kunststoffhohlkörper leicht auf dem Standteller bzw. dem Formstück positionieren. Für gewöhnlich weist die Bodenkontur des Kunststoffhohlkörpers eine konkave Form auf, ist demnach nach innen gewölbt. Entsprechend ist der Standteller bzw. das Formstück ausgebildet und weist eine konvexe Oberflächenkontur auf. Hierdurch ist der Kunststoffhohlkörper leicht auf dem Standteller absetzbar und zentrierbar, wobei zusätzlich die korrespondierenden Konturen des Formstücks und des Bodens der PET-Flasche einem seitlichen Verrutschen entgegenwirken.

Weiterhin ist bevorzugt vorgesehen, dass der Kunststoffhohlkörper punktuell auf dem Standteller zur Anlage bringbar ist, insbesondere der Kunststoffhohlkörper mit Spiel auf dem Standteller aufsetzbar ist. Das Formstück muss keine genaue Negativkontur des Behälterbodens aufweisen. Regelmäßig ist der Boden einer PET-Flasche mit Versteifungsrippen ausgeführt, die in einer bevorzugten Ausführungsform nicht von der Oberfläche des Formstücks wiedergegeben werden. Die Kontur des Formstücks bzw. des Standtellers entspricht demnach nicht zwingend 1:1 der Bodenkontur des Kunststoffhohlkörpers. Zudem ist es vorgesehen, Formstücke bereitzustellen, die nur zum Teil einer jeweiligen Bodenkontur eines Kunststoffhohlkörpers entsprechen, so dass unterschiedlich ausgestaltete Böden mit einem Formstück korrespondieren.

Gemäß einer besonders vorteilhaften Ausgestaltung der Erfindung entspricht das Formstück in etwa der Bodenkontur des Kunststoffhohlkörpers. Der Kunststoffhohlkörper ist wenigstens abschnittsweise plan mit dem Formstück in Anlage bringbar. Durch eine flächige Auflage des Kunststoffhohlkörpers auf dem Formstück ist die Kühlung des Behälterbodens besonders wirksam. Durch einen hohen Kühleffekt wird die Zeit, die zum Erreichen der maximal zulässigen Temperatur nötig ist, weiter reduziert. Dieses hat insbesondere auch auf die Prozessgeschwindigkeit vorteilhafte Auswirkungen.

Nach einer besonders vorteilhaften Ausgestaltung der Erfindung ist der Standteller und/oder das Formstück aus einem Material mit hoher Wärmeleitfähigkeit gebildet, insbesondere aus Aluminium, Kupfer oder dergleichen, zur Ableitung der Wärme aus dem Kunststoffhohlkörper. Im Gegensatz zu Luft oder anderen flüssigen Kühlmitteln, die im Stand der Technik Verwendung finden, weisen Aluminium und Kupfer eine hohe Wärmeleitzahl auf, durch die besonders effektiv Wärme aus dem Behälterboden abgeführt werden kann. Andere Materialien mit einer ähnlich hohen Wärmeleitfähigkeit sind demnach auch einsetzbar.

Nach einer Weiterbildung der Erfindung weist das Formstück Kühlrippen auf. Durch die Kühlrippen wird die Oberfläche des Formstücks vergrößert, so dass zusätzlich der Wärmeabtrag erleichtert wird. Durch die größere Oberfläche des Formstücks wird zudem die Weidereinsetzbarkeit des Formstücks nach Aufnahme eines Kunststoffhohlkörpers reduziert.

Besonders vorteilhaft weist in einer weiteren Ausführungsform das Formstück Ausnehmungen auf zur Beaufschlagung und/oder Durchleitung von Kühlmitteln, wobei die Kühlmittel der Kühlung des Kunststoffhohlkörperbodens dienen. Zur Erhöhung des Wärmeabtrags aus dem Kunststoffhohlkörperboden wird das Formstück aktiv gekühlt, wobei wenigstens das Formstück mit einem Kühlmittel versetzt wird, insbesondere von diesem durchströmt wird. Nach einem anderen Ausführungsbeispiel wird das Kühlmittel durch das Formstück geleitet und auf den Kunststoffhohlkörperboden derart gerichtet, dass derselbige von dem Kühlmittel umströmt wird.

Gemäß einer Weiterbildung der Erfindung ist der Standteller drehbar ausgebildet. Zusätzlich ist der Standteller in einer vertikalen Richtung beweglich. Während der Weiterbearbeitung der PET-Flaschen werden die Flaschen durch Haltemittel fixiert und um eine Längsachse rotiert. Das Haltemittel wirkt von einer dem Boden entgegengesetzten Seite der PET-Flasche auf die PET-Flasche ein. Zur Vermeidung von eventuell auftretenden Lastspitzen ist der Standteller nachgiebig ausgebildet, wodurch eine ungewollte Verformung des noch warmen und deformierbaren Behälterbodens vermieden werden kann. Während des Etikettierens wird die PET-Flasche rotiert, so dass bei einem ebenfalls rotierenden Standteller der Behälterboden nicht geschleift wird.

Weiterhin wird die erfindungsgemäße Aufgabe durch ein Verfahren mit den Merkmalen des Anspruchs 8 gelöst. Danach wird ein Verfahren vorgeschlagen zur Herstellung von Kunststoffhohlkörpern, insbesondere PET-Flaschen, mittels Streckblasen in einer Blockanlage mit Füller und Etikettiereinrichtung, wobei der Boden der Kunststoffhohlkörper während der dem Streckblasen nachgeschalteten Weiterbearbeitung in dem Füller oder der Etikettiermaschine gekühlt wird.

Dazu werden die Standteller in der der Blasmaschine nachgeschalteten Weiterbehandlungsmaschine verwendet, die teilweise an die Kontur des Kunststoffhohlkörperbodens angepasst werden, damit die Wärme aus dem Boden abgeleitet werden kann. Die Ableitung der Wärme aus dem Kunststoffhohlkörperboden erfolgt passiv und/oder aktiv durch ein zusätzlich einem Bereich des Kunststoffhohlkörpers zugeführtes Kühlmittel. Die Kühlung und die besondere Ausgestaltung des Standtellers wirkt einer Bodenauswölbung bei einer Innendruckbeaufschlagung des Kunststoffhohlkörpers entgegen.

Weitere vorteilhafte Ausgestaltungen des Verfahren und der Vorrichtung ergeben sich aus den Unteransprüchen.

Ein bevorzugtes Ausführungsbeispiel der Erfindung wird nachfolgend anhand der Zeichnung näher erläutert. In dieser zeigen:

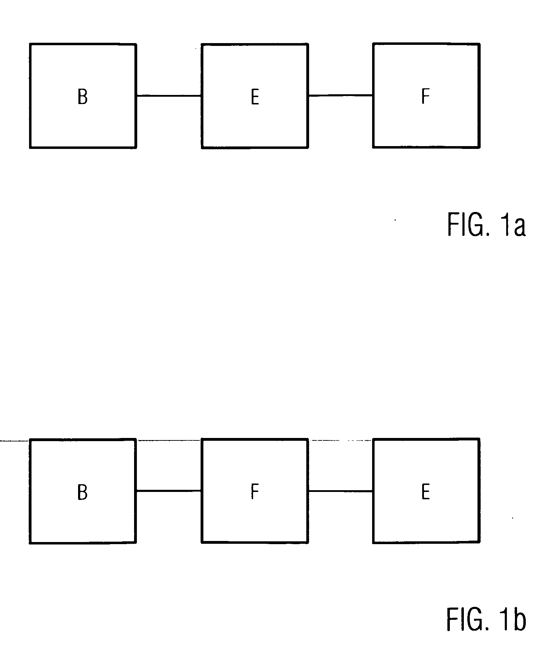

- Fig. 1a: eine schematische Darstellung einer Blasvorrichtung mit verblockter Etikettiermaschine und Füller.
- Fig. 1 b: eine schematische Darstellung einer Blasvorrichtung mit verblocktem Füller und Etikettiermaschine.
- Fig. 2: einen seitlichen Schnitt einer PET-Flasche mit erfindungsgemässem Standteller mit Formstück für eine Etikettiermaschine,
- Fig. 3: einen schematischen Längsschnitt durch einen Füller mit erfindungsgemässem Standteller für die Flasche und
- Fig. 4: einen Längsschnitt durch einen erfindungsgemässen Standteller mit Formstück mit aktiver Kühlung.

In den Fig. 1a und 1b sind zwei Blockanlagenvarianten dargestellt, wobei bei der Variante 1a der Blasmaschine B als Weiterbehandlungsmaschine eine Etikettiermaschine E und bei der Variante der Figur 1b ein Füller F nachgeschaltet ist. Die Maschinen sind miteinander verblockt, d.h. sie sind räumlich und oft auch steuerungs- und antriebsmäßig miteinander verbunden bzw, koordiniert, sodass in einem Gang aus eine Vorformling eine etikettierte Flasche entsteht.

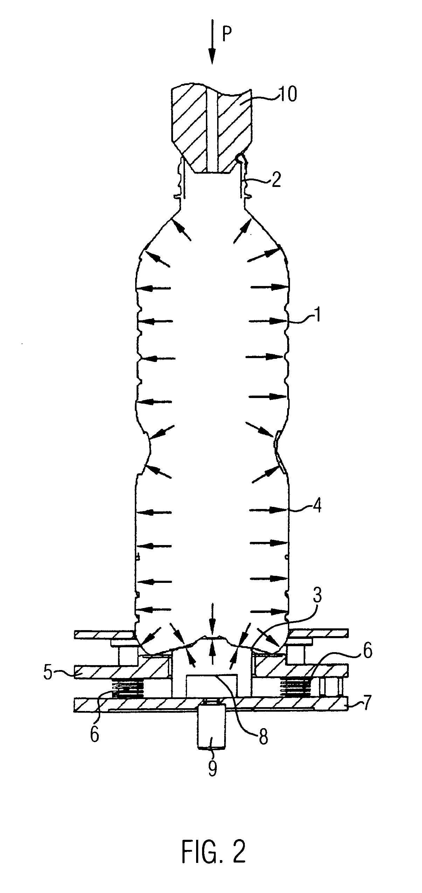

In Fig. 2 ist in ein erfindungsgemäß ausgebildeter Standteller gezeigt, wie er in einer Etikettiermaschine E verwendet werden kann, wenn gemäß Variante 1a vor dem Füllen eine Voretikettierung erfolgt., d.h. der Blasmaschine B als Weiterbehandlungsmaschine eine Etikettiermaschine nachgeschaltet ist. In diesem Fall muss die Flasche, weil sie leer ist, mit durch die kleinen Pfeile angedeutetem Innenluftdruck stabilisiert werden. Über die Flaschenmündung 2 wird diese Druckluft P durch die Zentrierglocke 10 hindurch eingebracht.

Die Flasche 1 steht mit ihrem Boden 3 auf dem Standteller 5 auf, mit dem sie durch die Etikettiermaschine hindurchtransportiert wird. Der Standteller ist nachgiebig gelagert und weist dazu in seinem unteren Bereich wenigstens zwei Federelemente 6 auf. Die Federelemente 6 fußen auf einer Tragvorrichtung 7, die als Widerlager für die Federelemente 6 dient. Durch die Federelemente 6 ist der Standteller 5 in einer vertikalen Richtung beweglich, sodass die Flasche zwischen der Zentrierglocke und den Standteller entsprechend etwas elastisch nachgebend eingespannt werden kann.

An dem Standteller 5 ist mittig ein Formstück 8, vorzugsweise austauschbar, angeordnet. Das Formstück 8 ist in dem Standteller 5 derart angeordnet, dass es sich durch den Standteller 5 hindurch erstreckt und über eine Oberfläche des Standtellers 5 herausragt. Das Formstück 8 ist mit seiner Oberflächenkontur an eine Bodenkontur der Flasche 1 so angepasst, dass sich zumindest teilweise flächige Berührungkontakte ergeben.

Da der Boden 3 der Flasche 1 ist nach innen gewölbt ausgebildet ist, weist die Kontur des Formstücks 8 eine entsprechend außen gerichtete Oberfläche auf.

Die Kontur des Formstücks 8 muss nicht exakt an die Bodenkontur der Flasche 1 angepasst sein, vielmehr reicht eine ungefähre Anpassung soweit aus, dass ein ausreichende Wärmeabfuhr möglich ist.

Das in der Fig. 2 dargestellte Formstück 8 ist als passives Kühlelement ausgebildet. Die Kühlung findet allein durch die Kontaktierung des Flaschenbodens mit dem eine hohe Wärmeleitfähigkeit aufweisenden Formstücks statt.. Das Formstück 8 ist dazu aus einem Material mit einer hohen Wärmeleitzahl wie z.B. Aluminium, Kupfer oder dergleichen gebildet.

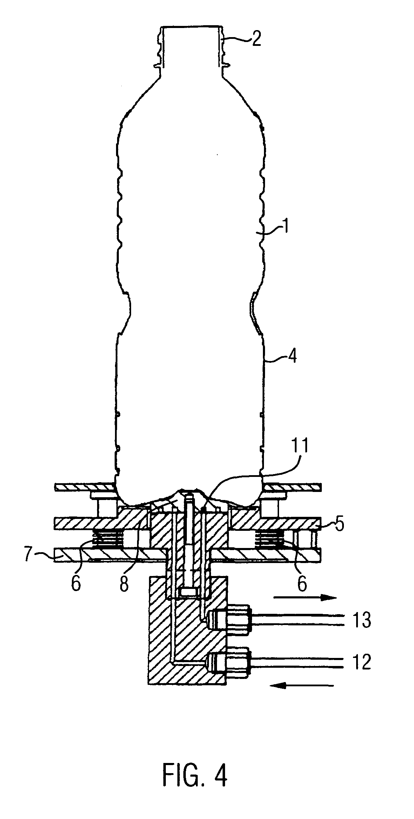

Demgegenüber ist das Formstück 8 in der Fig. 4 aktiv gekühlt. Dieses Formstück 8 ist mit Ausnehmungen bzw. Kanälen 11 durchzogen und an einen Kühlkreislauf mit Vorlauf 12 und Rücklauf 13 angeschlossen, sodass es mit Kühlmittel beaufschlagt werden kann.

In einem anderen Ausführungsbeispiel weist das Formstück 8 eine Öffnung benachbart zum Boden 3 der Flasche 1 auf, wodurch das Kühlmittel direkt in den Zwischenraum zwischen Flasche 1 und Formstück 8 gelangt und den Boden 3 umspült.

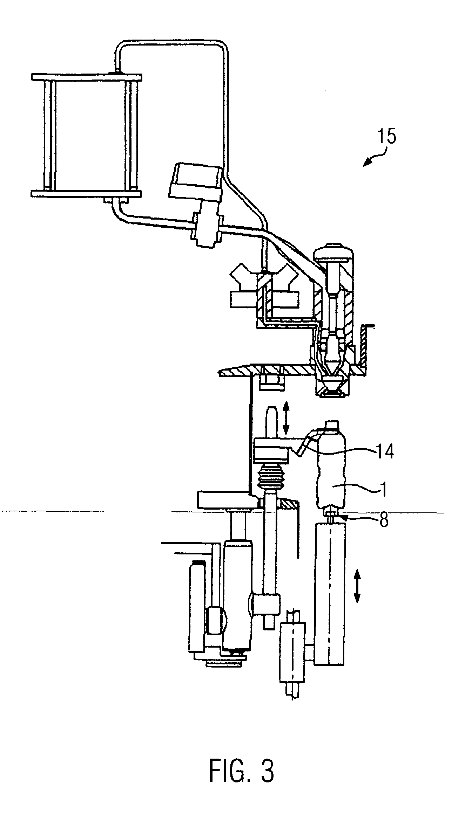

Fig. 3 zeigt ein Ausführungsbeispiel, bei dem der Standteller eines Füllers 15 eine Formstück 8 zum Kühlen des Flaschenbodens aufweist. Diese Variante wird insbesondere dann eingesetzt, wenn der - im übrigen bekannte und deshalb hier nicht weiter beschriebene - Füller als Weiterbehandlungsmaschine unmittelbar der Blasmaschine nachgeschaltet ist, wie das in Fig. 1.b. angedeutet ist. Dabei wird der Flaschenboden also während des Transports durch den Füller gekühlt. Auch hier kann eine aktive Kühlung sinnvoll sein, d.h. das Formstück könnte auch hier an einen Kühlwasserkreislauf angeschlossen sein, wie das in Fig. 4 angedeutet ist.

## Patentansprüche

1. Vorrichtung zur Herstellung und Weiterbearbeitung von Kunststoffhohlkörpern, insbesondere PET-Flaschen, mit einer Streckblaseinrichtung und einer damit verblockten Etikettiermaschine und mit Mitteln zur Kühlung der Kunststoffhohlkörper, **gekennzeichnet durch** wenigstens einen drehbaren Standteller (8) in der Etikettiermaschine (E), auf den jeweils ein Kunststoffhohlkörper (1) anordenbar ist und dessen Standfläche (3) wenigstens teilweise mit einer äußeren Bodenkontur des Kunststoffhohlkörpers korrespondiert, und der Standteller ein Formstück aufweist, insbesondere der Standteller als Formstück (3) ausgebildet ist, wobei das Formstück Kühlrippen aufweist, und/oder das Formstück Ausnehmungen (11) zur Beaufschlagung und/oder Durchleitung von Kühlmittel aufweist..

2. Vorrichtung nach Anspruch 1, **dadurch gekennzeichnet, dass** das Formstück wenigstens teilweise im Bereich einer Auflage zwischen dem Kunststoffhohlkörper und dem Standteller angeordnet ist.

3. Vorrichtung nach wenigstens einem der vorhergehenden Ansprüche, **dadurch gekennzeichnet, dass** der Kunststoffhohlkörper punktuell auf dem Standteller zur Anlage bringbar ist, insbesondere der Kunststoffhohlkörper mit Spiel auf dem Standteller aufsetzbar ist.

4. Vorrichtung nach wenigstens einem der vorhergehenden Ansprüche, **dadurch gekennzeichnet, dass** das Formstück in etwa der Bodenkontur des Kunststoffhohlkörpers entspricht und der Kunststoffhohlkörper ist wenigstens abschnittsweise plan mit dem Formstück in Anlage bringbar.

5. Vorrichtung nach wenigstens einem der vorhergehenden Ansprüche, **dadurch gekennzeichnet, dass** der Standteller und/oder das Formstück aus einem Material mit hoher Wärmleitfähigkeit gebildet ist, insbesondere Aluminium, Kupfer oder dergleichen, zur Ableitung von Wärme aus dem Kunststoffhohlkörper.

6. Vorrichtung nach wenigstens einem der vorhergehenden Ansprüche, **dadurch gekennzeichnet, dass** der Standteller in einer vertikalen Richtung beweglich in der Vorrichtung angeordnet ist.

7. Vorrichtung nach wenigstens einem der vorhergehenden Ansprüche, **dadurch gekennzeichnet, dass** der Standteller mit dem Formstück so ausgebildet ist, dass er einer Bodenauswölbung bei Innendruckbeaufschlagung des Kunststoffhohlkörpers entgegenwirkt.

8. Verfahren zur Herstellung von Kunststoffhohlkörpern, insbesondere PET-Flaschen, mittels Streckblasen in einer Blockanlage und Etikettiereinrichtung nach Anspruch 1, wobei der Boden der Kunststoffhohlkörper während der Weiterbehandlung in der der Blasmachine nachgeschalteten Maschine auf einem Standteller dieser Maschine gekühlt und gedreht wird.

9. Verfahren nach Anspruch 8, **dadurch gekennzeichnet, dass** der Standteller in der der Blasmaschine nachgeschalteten Weiterbehandlungsmaschine verwendet wird, der Standteller teilweise an die Kontur des Kunststoffhohlkörpers angepasst ist, damit die Wärme aus dem Kunststoffhohlkörperboden abgeleitet werden kann, und die Ableitung der Wärme passiv und/oder aktiv durch ein zusätzlich einem Bereich des Kunststoffhohlkörpers zugeführtes Kühlmittel erfolgt.

10. Verfahren nach Anspruch 8 oder 9, **dadurch gekennzeichnet, dass** einer Bodenauswölbung bei einer Innendruckbeaufschlagung des Kunststoffhohlkörpers durch den Standteller entgegengewirkt wird.

## Claims

1. An apparatus for producing and further processing hollow plastic bodies, in particular PET bottles, comprising a stretch blow moulding unit and a labeller, which is block-connected thereto and which comprises means for cooling the hollow plastic bodies, **characterized by** at least one rotatable support plate (8) provided in the labeler (E) and adapted to have each arranged thereon a respective hollow plastic body (1), the supporting area (3) of said support plate corresponding, at least partially, to an outer bottom contour of the hollow plastic body, the support plate provided with a shaped part, in particular, the support plate being implemented as a shaped part (3), whereas the shaped part is provided with cooling fins and/or the shaped part is provided with openings (11) for supplying and/or conducting through a coolant.

2. An apparatus according to claim 1, **characterized in that** the shaped part is arranged, at least partially, in an area of contact between the hollow plastic body and the support plate.

3. An apparatus according to any one of the preceding claims, **characterized in that** the hollow plastic body is adapted to be brought into contact with the support plate at certain locations thereof, and in particular, that the hollow plastic body is adapted to be placed o the support plate with a certain amount of play.

4. An apparatus according to any one of the preceding claims, **characterized in that** the shaped part corresponds approximately to the bottom contour of the hollow plastic body, and that the hollow plastic body is adapted to be brought into planar contact with the shaped part at least in certain sections thereof.

5. An apparatus according to any one of the preceding claims, **characterized in that** the support plate and/or the shaped part consist of a material having a high thermal conductivity, in particular, aluminum, copper or the like, so as to dissipate heat from the hollow plastic body.

6. An apparatus according to any one of the preceding claims, **characterized in that** the support plate is arranged in said apparatus such that it is movable in a vertical direction.

7. An apparatus according to any one of the preceding claims, **characterized in that** the support plate and the shaped part are implemented such that they will prevent the bottom of the hollow plastic body from bulging when pressure is applied to the interior of said hollow plastic body.

8. A method of producing hollow plastic bodies, in particular PET bottles, by means of stretch blow moulding in a block array comprising a labeler according to claim 1, whereas, while the hollow plastic body is subjected to further processing in the machine following the blow moulding machine, the bottom of the hollow plastic body is cooled and rotated on a support plate of said machine.

9. A method according to claim 8, **characterized in that** the support plate is used in the machine following the blow moulding machine, the support plate corresponding, at least partially, to an outer bottom contour of the hollow plastic body for dissipating the heat from the hollow plastic body bottom, the heat being dissipated passively and/or actively by a coolant that is additionally supplied to an area of the hollow plastic body.

10. A method according to claim 8 or 9, **characterized in that** the support plate will prevent the bottom of the hollow plastic body from bulging when pressure is applied to the interior of said hollow plastic body.

## Revendications

1. Unité pour la fabrication et la poursuite de la transformation de corps creux de matière plastique, notamment des bouteilles en PET, comprenant un dispositif d'étirage-soufflage et une machine d'étiquetage qui y est directement interconnectée, ainsi que des moyens pour le refroidissement des corps creux de matière plastique, **caractérisée par** au moins un plateau de support rotatif (8) dans la machine d'étiquetage (E), sur lequel peut être placé respectivement un corps creux de matière plastique (1), et dont la surface de support (3) correspond au moins partiellement à un contour extérieur du fond du corps creux de matière plastique, et en ce que le plateau de support comporte une pièce de forme, le plateau de support étant en particulier réalisé en tant que pièce de forme (3), la pièce de forme présentant des nervures de refroidissement et/ou la pièce de forme présentant des évidements (11) pour l'alimentation en fluide de refroidissement et/ou pour y faire circuler celui-ci.

2. Unité selon la revendication 1, **caractérisée en ce que** la pièce de forme est agencée au moins partiellement dans la zone d'un appui entre le corps creux de matière plastique et le plateau de support.

3. Unité selon l'une au moins des revendications précédentes, **caractérisée en ce que** le corps creux de matière plastique peut être amené en appui par points sur le plateau de support, le corps creux de matière plastique pouvant notamment être appliqué avec jeu sur le plateau de support.

4. Unité selon l'une au moins des revendications précédentes, **caractérisée en ce que** la pièce de forme correspond environ au contour du fond du corps creux de matière plastique, et le corps creux de matière plastique peut être amené, au moins par secteurs, en appui plan avec la pièce de forme.

5. Unité selon l'une au moins des revendications précédentes, **caractérisée en ce que** le plateau de support et/ou la pièce de forme sont réalisés en un matériau présentant une conductivité thermique élevée, notamment de l'aluminium, du cuivre ou des éléments similaires, en vue d'évacuer de la chaleur du corps creux de matière plastique.

6. Unité selon l'une au moins des revendications précédentes, **caractérisée en ce que** le plateau de support est agencé dans l'unité, de manière mobile dans une direction verticale.

7. Unité selon l'une au moins des revendications précédentes, **caractérisée en ce que** le plateau de support avec la pièce de forme, est réalisé de manière à s'opposer à un gonflement du fond lors d'une sollicitation en pression de l'intérieur du corps creux de matière plastique.

8. Procédé de fabrication de corps creux de matière plastique, notamment des bouteilles en PET, par étirage-soufflage, dans une installation interconnectée et un dispositif d'étiquetage selon la revendication 1, le fond des corps creux de matière plastique étant, pendant la poursuite de la transformation qui suit, refroidi et mis en rotation sur un plateau de support de la machine succédant à la machine de soufflage.

9. Procédé selon la revendication 8, **caractérisé en ce que** le plateau de support est utilisé dans la machine de poursuite de la transformation, qui succède à la machine de soufflage, le plateau de support est adapté partiellement au contour du corps creux de matière plastique pour pouvoir évacuer la chaleur du fond du corps creux de matière plastique, et l'évacuation de la chaleur s'effectue de manière passive et/ou active par un fluide de refroidissement amené en supplément à une zone du corps creux de matière plastique.

10. Procédé selon la revendication 8 ou la revendication 9, **caractérisé en ce que** grâce au plateau de support, on agit à l'encontre d'un gonflement du fond lors d'une sollicitation en pression de l'intérieur du corps creux de matière plastique.
